# EUROPEAN PATENT APPLICATION

(11) **EP 2 924 764 A1**
(43) Date of publication of application: **30.09.2015**
(21) Application number: 14168069.4
(22) Date of filing: 13.05.2014
(51) Int. Cl.: H01M 2/10

(54) **Battery for electronic cigarette**

(30) Priority: 26.03.2014 CN 201420138978 U
(71) Applicant: Liu, Tuanfang, 343200 Ji'an City Jiangxi (CN)
(72) Inventor: Liu, Tuanfang, 343200 Ji'an City Jiangxi (CN)
(74) Representative: Hryszkiewicz, Danuta

(57) **Abstract**

A battery for an electronic cigarette including a core, a control plate, a positive contact, a negative contact, an insulating ring, a fixing ring, a pad, an insulting piece, and a steel pipe. The positive contact is disposed at the top of the core, and passes through the insulating ring, the fixing ring, and the pad in sequence to connect to a positive electrode of the core. The insulating piece, the control plate, and the negative contact are disposed in sequence close to the rear part of the core, and the negative contact contacts with an outer ring of the core whereby connecting to a negative electrode of the core. The control plate and the positive contact are connected to the core by electric welding wires.

## Description

The invention relates to a battery for an electronic cigarette.

It is well-known that smoking is harmful to health, but there are still hundreds of millions of smokers in the world, and the trend is continuing. To purify the environment, prohibition of smoking in public places has become the consensus. Thus, cigarette substitutes, such as patches for quitting smoking, nicotine mouthwash, nicotine gum, nicotine drink, flourish in the market. Although the cigarette substitutes are a step in the right direction as they do not deliver tar, nicotine is only slowly absorbed in the blood and thus the achieved effective peak concentration of nicotine is relatively low, and the feeling of satisfaction resulting from a high concentration of tobacco alkali is not achieved. Meanwhile, users consuming cigarette substitutes are deprived of smoking actions such as inhaling, exhaling, and puffing.

A typical battery for an electronic cigarette is fixed in the electronic cigarette. To improve the output amount of smoke, a control circuit is disposed on the circuit board of the battery. However, the assembly of the control circuit is complicated thereby increasing the material and labor cost. And when the battery is charging, the electronic cigarette cannot be used.

In view of the above-described problems, it is one objective of the invention to provide a battery for an electronic cigarette.

To achieve the above objective, in accordance with one embodiment of the invention, there is provided a battery for an electronic cigarette comprising a core, a control plate, a positive contact, a negative contact, an insulating ring, a fixing ring, a pad, an insulting piece, and a steel pipe. The positive contact is disposed at a top of the core, and passes through the insulating ring, the fixing ring, and the pad in sequence to connect to a positive electrode of the core. The insulating piece, the control plate, and the negative contact are disposed in sequence close to a rear part of the core, and the negative contact contacts with an outer ring of the core whereby connecting to a negative electrode of the core. The control plate and the positive contact are connected to the core by electric welding wires. The positive contact, the insulating ring, the fixing ring, the pad, the core, the insulating piece, the control plate, and the negative contact are all disposed inside the steel pipe.

In a class of this embodiment, the battery is a 18650-type lithium ion battery having a working voltage of 5 V. The battery is disposed in the electronic cigarette through screw thread.

In a class of this embodiment, the 18650-type lithium ion battery comprises a protective circuit capable of detecting a load resistance less than 0.5 Ω. When the load resistance exceeds 0.5 Ω, the battery can output more power automatically.

In a class of this embodiment, an output power of the 18650-type lithium ion battery is between 5 and 12 W.

In a class of this embodiment, an output voltage of the 18650-type lithium ion battery is maintained at 5 V.

In a class of this embodiment, the 18650-type lithium ion battery is capable of being charged by an 4.2 V external voltage.

Advantages according to embodiment of the invention are summarized as follows. The output voltage of the battery is controlled at 5 V, which prolongs the total service time of the battery. The battery has a simple design thereby reducing the production cost of the electronic cigarette, and has the functions of short circuit and high current protection thereby ensuring the application security.

The invention is described hereinbelow with reference to accompanying drawings, in which:
FIG. 1 is a stereograph of a battery for an electronic cigarette according to one embodiment of the invention; and
FIG. 2 is an exploded view of a battery for an electronic cigarette according to one embodiment of the invention.

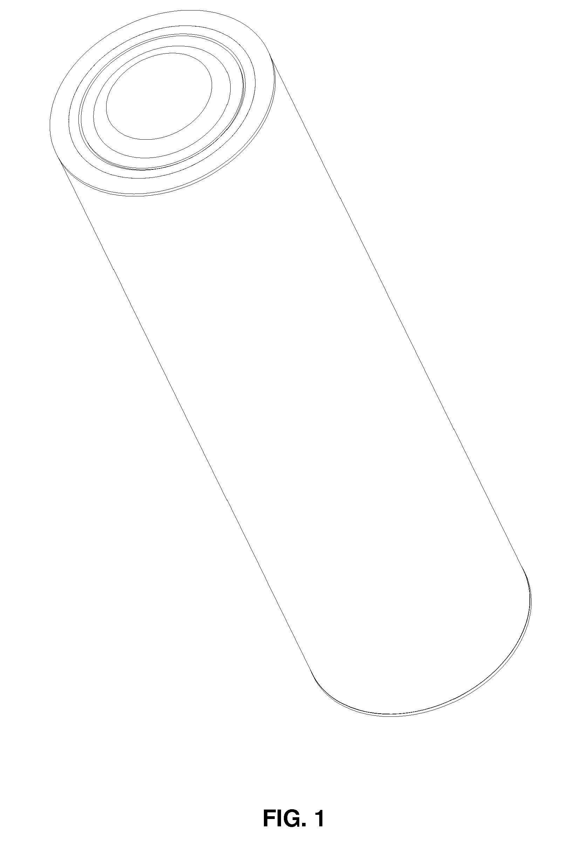

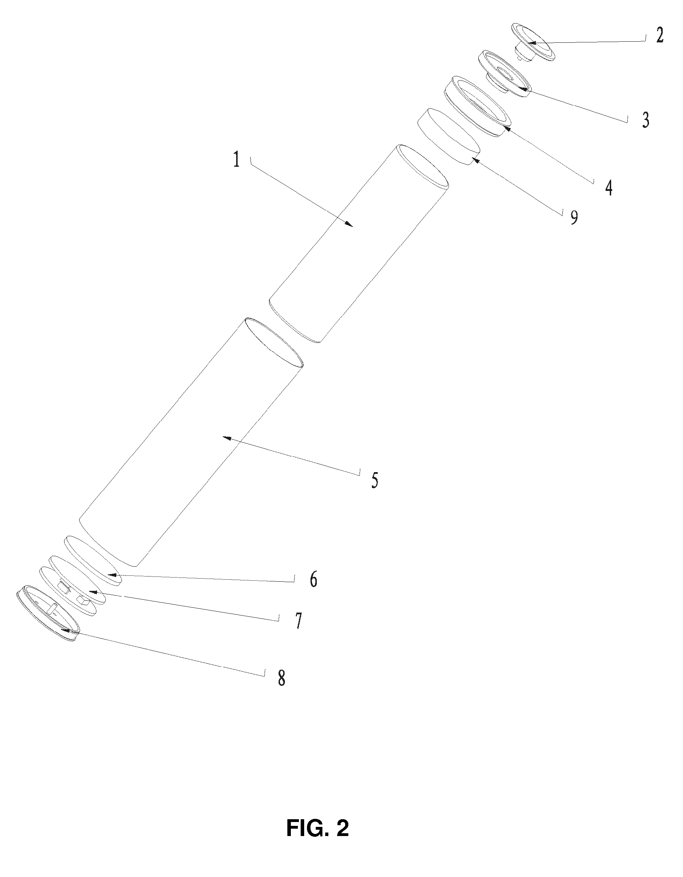

As shown in FIGS. 1 and 2, a battery for an electronic cigarette comprises a core 1, a control plate 7, a positive contact 2, a negative contact 8, an insulating ring 3, a fixing ring 4, an ethylene-vinyl acetate copo (EVA) pad 9, an insulting piece 6, and a steel pipe 5. The positive contact 2 is disposed at a top of the core 1, and passes through the insulating ring 3, the fixing ring 4, and the EVA pad 9 in sequence to connect to a positive electrode of the core 1. The insulating piece 6, the control plate 7, and the negative contact 8 are disposed in sequence close to a rear part of the core 1, and the negative contact 8 contacts with an outer ring of the core 1 whereby connecting to a negative electrode of the core 1. The control plate 7 and the positive contact 2 are connected to the core 1 by electric welding wires. The positive contact 2, the insulating ring 3, the fixing ring 4, the EVA pad 9, the core 1, the insulating piece 6, the control plate 7, and the negative contact 8 are all disposed inside the steel pipe 5.

The battery is a 18650-type lithium ion battery having a working voltage of 5 V. The 18650-type lithium ion battery comprises a protective circuit capable of detecting a load resistor less than 0.5 Ω. When the internal load resistance is less than 0.5 Ω, the power output of the core is shut down. The output power of the 18650-type lithium ion battery is between 5 and 12 W.

The core 1 is purchased from the market and is rechargeable repeatedly. The core has the functions of short circuit and high current protection.

The battery has function of low voltage protection. When the internal voltage of the core is less than 3.2 V, the core stops outputting and the low voltage protection takes effect.

The battery can be charged via a 4.2 V, 500 mA charger.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A battery for an electronic cigarette, comprising:
a) a core;
b) a control plate;
c) a positive contact;
d) a negative contact;
e) an insulating ring;
f) a fixing ring;
g) a pad;
h) an insulating piece; and
i) a steel pipe;
**characterized in that**
the positive contact is disposed at a top of the core, and passes through the insulating ring, the fixing ring, and the pad in sequence to connect to a positive electrode of the core;
the insulating piece, the control plate, and the negative contact are disposed in sequence close to a rear part of the core, and the negative contact contacts with an outer ring of the core whereby connecting to a negative electrode of the core;
the control plate and the positive contact are connected to the core by electric welding wires; and
the positive contact, the insulating ring, the fixing ring, the pad, the core, the insulating piece, the control plate, and the negative contact are all disposed inside the steel pipe.

2. The battery of claim 1, being a 18650-type lithium ion battery having a working voltage of 5 V.

3. The battery of claim 2, **characterized in that** the 18650-type lithium ion battery comprises a protective circuit capable of detecting a load resistor less than 0.5 Ω.

4. The battery of claim 2, **characterized in that** an output power of the 18650-type lithium ion battery is between 5 and 12 W.
